# EUROPÄISCHE PATENTANMELDUNG

(11) **EP 4 618 360 A1**
(43) Veröffentlichungstag der Anmeldung: **17.09.2025**
(21) Anmeldenummer: 24163576.2
(22) Anmeldetag: 14.03.2024
(51) Int. Cl.: H02J 7/00, H01M 10/48

(54) **ENTLADESYSTEM FÜR SPEICHERZELLEN UND VERFAHREN ZUM BETREIBEN EINES ENTLADESYSTEMS FÜR SPEICHERZELLEN**

(71) Anmelder: Siemens Aktiengesellschaft, 80333 München (DE)
(72) Erfinder: Schulte, Sascha, 91315 Höchstadt (DE); Baldauf, Manfred, 91056 Erlangen (DE)
(74) Vertreter: Siemens Patent Attorneys

(57) **Zusammenfassung**

Die Erfindung betrifft ein Entladesystem (2) für Speicherzellen (5) umfassend
- ein Steuergerät (6) mit einer Steuereinheit (8)
eine Spannungsmesseinheit (10),
- eine Stromquelle (12)
- eine Entlade-Einheit (14) umfassend wenigstens eine Aufnahme-Einheit (16) für ein Speichermodul (4), und
- eine an die Geometrie des Speichermoduls (4) angepasste Kontaktierungsvorrichtung (18),
dadurch gekennzeichnet, dass
eine Mehrzahl von mechanisch fest miteinander verbundener Speicherzellen das Speichermodul (4) bilden
die Kontaktierungsvorrichtung in derart mit dem Speichermodul (4) in Verbindung steht, dass eine elektrische Kontaktierung (20) der Speicherzellen (5) erfolgt, so dass die Speicherzellen (2) in Reihe (22) geschaltet sind und mit der Stromquelle (12) in einem schließbaren Stromkreis (24) angeordnet sind und,
die in Reihe (22) geschalteten Speicherzellen (5) jeweils zur Auswertung von Spannungsmessungen in Verbindung (32) zur Spannungsmesseinheit (10) steht

- wobei zu den Polen (28) der in der Reihenschaltung (22) befindlichen Speicherzelle (5) jeweils ein Kurzschlussschalter (30) parallel geschaltet ist, der in Steuerverbindung (34) mit dem Steuergerät (6) steht und
- der durch ein durch die Steuereinheit (8) des Steuergeräts (6) erzeugtes Steuersignal (36) schaltbar ausgestaltet ist.

## Beschreibung

Die Erfindung betrifft ein Entladesystem für Speicherzellen nach dem Oberbegriff des Patentanspruchs 1 sowie ein Verfahren zum Betreiben eines Entladesystems für Speicherzellen nach Patentanspruch 9.

Bei der industriellen Entsorgung oder dem Recycling von alten oder schadhaften Batteriemodulen und Batteriepacks müssen diese zunächst vollständig entladen werden, um in weiteren Verwertungsschritten keine Schäden durch die teils erhebliche, gespeicherte Energiemenge zu erzeugen. Dabei ist anzumerken, dass die industriell gefertigten Batteriemodule typischerweise aus 12 bis 72 Speicherzellen bestehen bzw. diese umfassen, die wiederum mechanisch und elektrisch fest miteinander verbunden sind. Die mechanische Verbindung der einzelnen Zellen zum Batteriemodul wird beispielsweise durch ein Verkleben oder durch einen verschweißten Spannrahmen erzielt. In einem derartigen Modul sind nie alle Speicherzellen perfekt identisch. Fertigungsbedingt unterscheiden sie sich bezüglich diverser elektrischer Kenngrößen, wie beispielsweise den Innenwiderstand, der Kapazität oder der Selbstentladung. Dies hat zur Folge, dass Speicherzellen in einem Speichermodul meist einen unterschiedlichen Energieinhalt bzw. Ladezustand haben. Bei einer Entladung des Speichermoduls mit einer Serien-Schaltung oder gemischter Serien-Parallel-Schaltung werden alle Speicherzellen mit dem gleichen Strom belastet. Bei unterschiedlichem Energiegehalt führt dies dazu, dass die Speicherzelle mit dem geringsten Energieinhalt vor allen anderen Speicherzellen vollständig entleert ist. Bei einem üblichen Recycling wird über die Betriebsgrenzen hinweg bis auf 0 V entladen. In diesem Fall weisen die anderen Speicherzellen gegebenenfalls noch signifikante Energiemengen (und damit Spannung) auf. Eine weitere Entladung der noch nicht vollständig entladenen Zellen ist nicht ohne zusätzliche Maßnahmen möglich, da die schwächste, bereits entladene Zelle sonst negativ beladen würde, was mit weiteren erheblichen Sicherheitsrisiken für den weiteren Recyclingbetrieb verbunden ist. Dies sollte aus Sicherheitsgründen vermieden werden.

Zellmodule für den industriellen Einsatz, insbesondere im Automobilsektor, verfügen meist über ein sogenanntes Balancing-System. Dieses ist ausdrücklich dafür vorgesehen, ungleiche Zellspannungen gegeneinander zu balancieren und das Speichermodul in einen Zustand zu versetzen, bei dem alle Spannungen identisch sind. Die Zellenspannung ist jedoch bei Speicherzellen unterschiedlicher Kapazität nicht identisch mit dem absoluten Energieinhalt, sondern nur gleichbedeutend mit dem relativen Ladezustand (State of charge). Nachteilig ist dabei auch, dass eine derartige Balancing-Schaltung üblicherweise mit wenigen mA, meist weniger als 100 mA, arbeitet. Damit dauert ein Balancing-Vorgang auch bei leicht unbalancierten Speichermodulen bis zu mehreren Stunden, was einen Einsatz in der industriellen Fertigung bzw. Zerlegung mit einem hohen Durchsatz ausschließt.

Alternativ werden gelegentlich Verfahren eingesetzt, in denen ein Mensch manuell einzelne Zellen mit zwei händisch an die Zellkontakte gehaltene Kabel die jeweiligen Speicherzellen entlädt. Eine andere Lösung besteht darin, nach Erreichen von 0 V Speicherzellenspannung an der schwächsten Zelle aufzuhören und in allen anderen Zellen eine Restenergie zu lassen. Dies ist aber potenziell gefährlich und bei besonders stark uneinheitlichen Speicherzellen auch mit erheblichen Restenergien in den nicht entladenen Zellen verbunden.

In der WO 2023174713 wird eine Methode vorgestellt, bei der einzelne Speicherzellen, die nicht mechanisch miteinander verbunden sind, in einem Haltesystem mit parallel geschalteter Diode entladen werden können und bei Erreichen einer unteren Grenzspannung aus dem Verbund entfernt werden. Dieses Verfahren ist dann zweckmäßig, wenn das Speichermodul so ausgestaltet ist, dass einzelne Zellen ohne Weiteres entnommen werden können und in ein entsprechendes Haltesystem eingesetzt werden können. Liegt jedoch ein fester Speicherverbund als Batteriemodul vor, der für das Recycling aufwändig zerlegt werden muss, muss die Entladung vor dem Zerlegen des Speichermoduls erfolgen, weshalb die genannte technische Lösung hier nicht anwendbar ist.

Der Erfindung liegt daher die Aufgabe zugrunde, ein Entladesystem für Speicherzellen sowie ein Verfahren zum Betreiben eines Entladesystems bereitzustellen, bei dem eine Mehrzahl von mechanisch fest miteinander verbundenen Speicherzellen ein vor dem Entladen nicht lösbares Speichermodul bilden. Dieses Entladesystem soll eine zügige Entladung von einzelnen Speicherzellen in der Art gewährleisten, dass am Ende des Entladevorgangs alle Speicherzellen gleichermaßen entladen sind.

Die Lösung der Aufgabe besteht in einem Entladesystem mit den Merkmalen des Patentanspruchs 1 sowie in einem Verfahren zum Betreiben eines Entladesystems für Speicherzellen mit den Merkmalen des Patentanspruchs 9.

Das Entladesystem für Speicherzellen nach Patentanspruch 1 umfasst ein Steuergerät mit einer Steuereinheit, wobei die Steuereinheit auch als Recheneinheit bezeichnet werden kann. Ferner umfasst das Entladesystem eine Spannungsmesseinheit sowie eine Stromquelle. Steuergerät mit Steuereinheit und Spannungsmesseinheit sowie Stromquelle können grundsätzlich in einem integrierten Gerät untergebracht sein, sie können jedoch auch getrennt vorliegen. Ferner umfasst das Entladesystem eine Entladeeinheit für ein Speichermodul und eine an die Geometrie des Speichermoduls angepasste Kontaktierungsvorrichtung. Die Aufnahmeeinheit kann dabei im einfachsten Fall eine ebene Oberfläche sein, auf die das Speichermodul gestellt wird, es kann aber auch jedoch eine Aufnahmeeinheit in Form eines Aufnahmerahmens ausgestaltet sein, in die das Speichermodul eingesetzt wird und justiert wird. Die Erfindung zeichnet sich dadurch aus, dass eine Mehrzahl von mechanisch fest miteinander verbundener Speicherzelle das Speichermodul bilden. Im Unterschied zum Stand der Technik wird hier ein Speichermodul mit mehreren Speicherzellen entladen, wobei die Speicherzellen dem Speichermodul nicht zerstörungsfrei entnehmbar sind. Dies wäre auch nur dann möglich, wenn die Speicherzellen bereits sicher entladen sind, was erst durch die Handhabung in einem Entladesystem sichergestellt ist.

Im Weiteren steht die Kontaktierungsvorrichtung mit dem Speichermodul in der Art in Verbindung, dass eine elektrische Kontaktierung der Speicherzellen in der Art erfolgt, dass die Speicherzellen in Reihe geschaltet sind und mit der Stromquelle in einem schließbaren Stromkreis angeordnet sind. Dabei ist die Stromquelle auch in die Reihenschaltung integriert. Dabei stehen die in Reihe geschalteten Speicherzellen jeweils zur Auswertung von Spannungsmessungen in Verbindung zur Spannungsmesseinheit. Ferner ist zu den Polen der in der Reihenschaltung befindlichen Speicherzellen jeweils ein Kurzschlussschalter parallel geschaltet, der wiederum in Steuerverbindung mit dem Steuergerät steht. Dieser Kurzschlussschalter ist durch ein Steuersignal, das durch die Steuereinheit des Steuergeräts erzeugt wird, schaltbar ausgestaltet.

Der Vorteil der vorliegenden Erfindung gegenüber dem Stand der Technik besteht zunächst darin, dass ein gesamtes Speichermodul mit einer Mehrzahl von Speicherzellen gemeinschaftlich kontaktiert und entladen werden kann. Es müssen somit nicht einzelne Zellen in die Entladeeinheit eingelegt werden, sondern es kann das ganze Modul oder größere Teile oder Teilabschnitte des Moduls gleichzeitig kontaktiert werden. Durch das Schließen des Kurzschlussschalters und des Erzeugens eines Kurzschlussstromes wird die in Reihe geschaltete und entleerte Speicherzelle somit aus dem Stromkreis genommen, sodass hier keine nennenswerten Ströme mehr fließen können und die so verschaltete Speicherzelle auch nicht negativ aufgeladen werden kann. Auf diese Weise können die so kontaktierten Speicherzellen des Speichermoduls nach und nach aus dem Stromkreis herausgenommen werden und somit wird das gesamte Modul sukzessive sicher entladen und kann einer weiteren Verwertung bzw. einem Recycling sicher zugeführt werden.

Die vorgesehene Spannungsmesseinheit dient zur Messung der Zellspannung V zwischen zwei Polen einer in Reihe geschalteten Speicherzelle. Dabei ist es zweckmäßig, wenn eine Schwellspannung festgelegt ist und der zu dieser Zelle parallel geschaltete Kurzschlussschalter in einem geschlossenen Zustand dann vorliegt, wenn die Schwellspannung unter einem Schwellwert liegt. In der Regel liegt der Schwellwert der Schwellspannung sehr nahe bei 0 V, beispielsweise 0,1 V.

Dabei ist es in einer Ausgestaltungsform der Erfindung zweckmäßig, wenn die Kurzschlussschalter in bzw. an der Kontaktierungsvorrichtung integriert sind. Das heißt die Kurzschlussschalter werden dabei auch räumlich nahe an den Polen der Speicherzelle angeordnet.

In einer alternativen Ausgestaltungform der Erfindung sind die Kurzschlussschalter im Steuergerät integriert und die Steuerverbindung läuft von der Kontaktierungsvorrichtung zum Steuergerät. Durch diese Ausgestaltung lassen sich die Kurzschlussschalter zentral im Steuergerät integrieren, was platzsparend ist. Diese erfordern jedoch Leitungen zwischen der Kontaktierungsvorrichtung und dem Steuergerät, die dann den Kurzschlussstromkreis mit dem Kurzschlussschalter abbilden.

Grundsätzlich kann die Steuerverbindung zwischen Steuergerät und dem Kurzschlussschalter in Form einer Funkverbindung oder in Form einer elektrischen Verbindung ausgestaltet sein.

Der Kurzschlussschalter ist ein durch ein Signal schaltbarer Schalter, dabei bietet sich vor allem ein Relay, ein Schütz- oder ein Halbleiterschalter als vorteilhafte Ausgestaltung an.

Auch für die Spannungsmesseinheit gilt, dass sie entweder im Steuergerät untergebracht ist, alternativ kann sie auch in vorteilhafter Weise direkt an der Kontaktierungsvorrichtung angeordnet sein, sodass die Spannungsmessung bei den einzelnen Speicherzellen direkt an dieser erfolgt und das Messsignal wird dann an das Steuergerät weitergeleitet.

Das Gleiche gilt auch für das Steuergerät an sich, das auch direkt an der Kontaktierungsvorrichtung angeordnet sein kann, sodass es sich hierbei sowohl für die Steuersignale als auch für die Messsignale und deren Übertragung um kurze Wege handelt.

Ein weiterer Bestandteil der Erfindung ist ein Verfahren zum Betreiben eines Entladesystems für Speicherzellen, umfassend folgende Schritte:
- Einbringen eines Speichermoduls, das eine Mehrzahl miteinander mechanisch verbundener Speicherzellen umfasst in eine Aufnahmeeinheit,
- Das Inverbindungbringen des Speichermoduls mit einer an diese geometrisch angepasste Kontaktierungsvorrichtung, wobei
   Pole der Speicherzellen in der Art kontaktiert werden, dass die Speicherzellen in Reihe geschaltet werden und mit einer Stromquelle in einem Stromkreis angeordnet werden, und die Pole mit einem Überbrückungsstromkreis verbunden werden, in dem durch ein Steuersignal schaltbare Kurzschlussschalter eingebracht sind,
- anschließend erfolgt das Messen einer Zellspannung V der Speicherzelle über deren Pole und
- Schließen des zu dieser Speicherzelle korrespondierenden Kurzschlussschalters, wenn die Zellspannung V der Speicherzelle einen vorgegebenen Schwellwert unterschreitet.

Das beschriebene Verfahren weist im Wesentlichen dieselben Merkmale auf wie die beschriebene Vorrichtung, die jedoch als Verfahrensmerkmale ausgebildet sind. Daher umfasst dieses Verfahren auch dieselben Vorteile, die bereits bezüglich des Entladesystems beschrieben sind.

In einer weiteren vorteilhaften Ausgestaltungsform des Verfahrens erfolgt eine weitere Messung der Zellspannung nach dem Schließen des Kurzschlussschalters nach einem bestimmten Zeitraum. Dies kann zweckmäßig sein, da durch Rekombinationseffekte, die auch als Relaxation bezeichnet werden, die Zellspannung einer leeren Zelle nach einer gewissen Zeit wieder ansteigen kann. In diesem Fall wäre es zweckmäßig, den Kurzschlussschalter wieder für eine kurze Zeit zu öffnen und erneut die entsprechende Speicherzelle in den Stromkreis zur Entladung mit einzubinden, bis der Spannungsmesswert an der Zelle erneut den Schwellwert unterschritten hat. Hierbei ist es auch zweckmäßig, die weitere Spannungsmessung nach einem definierten Zeitraum vorzunehmen, wobei der Zeitraum zwischen 1 Minute und 180 Minuten liegen kann.

Weitere Ausgestaltungsformen und weitere Merkmale der Erfindung werden anhand der folgenden Figuren näher beschrieben. Dabei handelt es sich um rein schematische Ausgestaltungsformen, die beispielhafter Natur sind und keine Einschränkung des Schutzbereichs darstellen. Merkmale mit derselben Bezeichnung jedoch in unterschiedlicher Ausgestaltungsform sind dabei mit denselben Bezugszeichen versehen. Dabei zeigen:
- Figur 1: eine schematische dreidimensionale Darstellung eines Entladesystems mit einem Speichermodul,
- Figur 2: ein Ersatzschaltbild während des Entladens eines Speichermoduls mit einer Mehrzahl von Speicherzellen,
- Figur 3: das Ersatzschaltbild nach Figur 2 mit einem geschlossenen Kurzschlussschalter zum Kurzschließen einer bereits entladenen Speicherzelle des Speichermoduls,
- Figur 4: eine Querschnittszeichnung durch das Entladesystem nach Figur 1 mit entfernt angeordnetem Steuergerät, vor Kontaktierung der Kontaktierungsvorrichtung mit dem Speichermodul,
- Figur 5: das Entladesystem nach Figur 4 in dem Zustand, dass eine Kontaktierung zwischen den Speicherzellen und der Kontaktierungsvorrichtung vorliegt,
- Figur 6: ein Entladesystem analog zu Figur 4 mit einer Funkverbindung zwischen Steuergerät und Kontaktierungsvorrichtung und
- Figur 7: ein analoges Entladegerät zu Figur 6, wobei das Steuergerät direkt an der Kontaktierungsvorrichtung angeordnet ist.

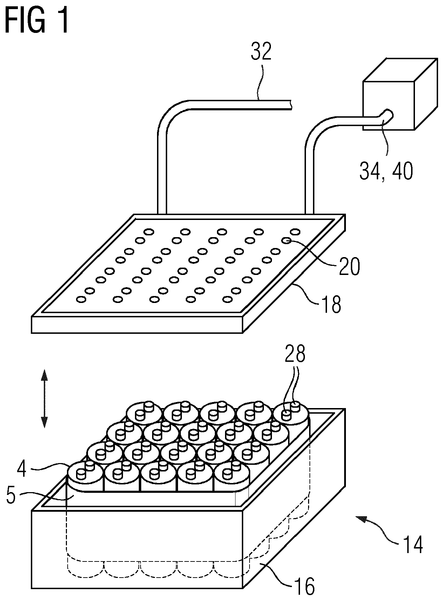

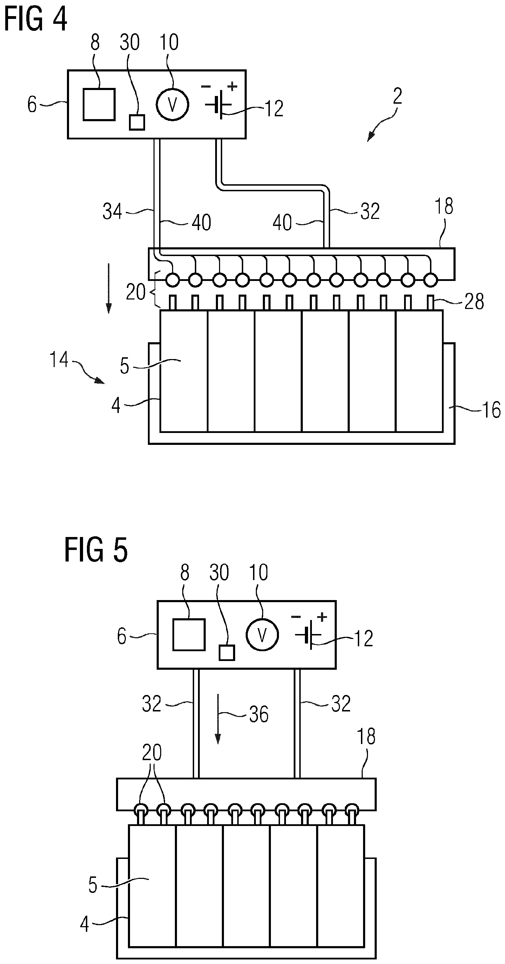

In Figur 1 ist rein schematisch in dreidimensionaler Form eine Entladeeinheit 14 des Entladesystems 2 (vergleiche Figur 4) dargestellt. Die Entladeeinheit 14 umfasst dabei eine Aufnahmeeinheit 16 für ein Speichermodul 4, das wiederum eine Mehrzahl von Speicherzellen 5 umfasst. Diese Aufnahmeeinheit 16 ist in dieser Form als rechteckige Rahmenstruktur ausgestaltet, in der das Speichermodul 4 eingebracht ist und fixiert ist. Grundsätzlich kann die Aufnahmeeinheit 16 auch als ebene Oberfläche ausgestaltet sein. Sie kann auch als ebene Oberfläche, die sich auf einem Förderband befindet, ausgestaltet sein, sodass in einer Serienverarbeitung die Speichermodule 4 kontinuierlich zum Entladen weiterbefördert werden.

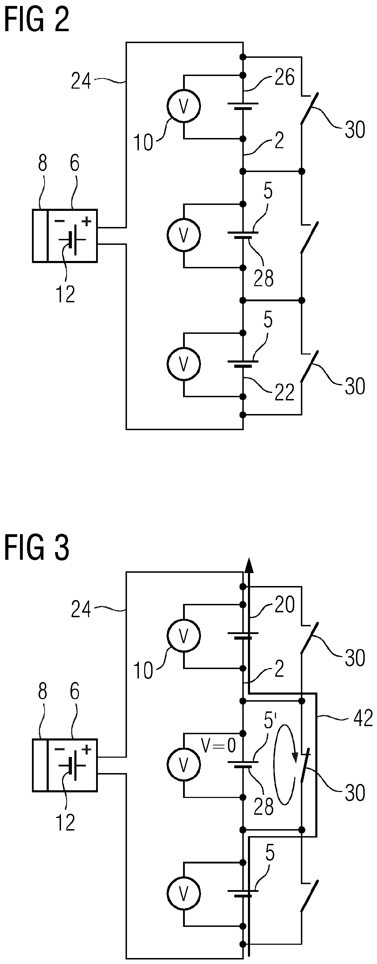

Ferner ist eine Kontaktierungsvorrichtung 18 vorgesehen, die eine Mehrzahl von hier schematisch dargestellten elektrischen Kontaktierungen 20 aufweist. In einem geschlossenen Zustand, der beispielsweise in Figur 5 dargestellt ist, liegt die Kontaktierungsvorrichtung 18 auf dem Speichermodul 4 auf und es kommt zu einer elektrischen Kontaktierung zwischen Polen 28 der einzelnen Speicherzellen 5 mit den elektrischen Kontaktierungen 20 der Kontaktierungsvorrichtung 18, sodass der in Figur 2 schematisch dargestellte Stromkreis ausgebildet wird.

Bei dem Speichermodul 4 gemäß Figur 1 handelt es sich um ein Speichermodul 4 mit einer Mehrzahl von Speicherzellen 5, wobei an dieser Stelle 20 Speicherzellen in dem Speichermodul 4 angeordnet sind. Derartige Aufbauten von Speichermodulen 4 sind beispielsweise in der Automobiltechnik zum Betreiben Elektrofahrzeugen üblich. Die Speicherzellen 5 sind im Speichermodul 4 mit einem Gießharz vergossen, sodass die einzelnen Speicherzellen 5 nicht zerstörungsfrei aus dem Modul 4 entnommen werden können, sondern das Speichermodul 4 in einem Stück dem Entladevorgang im Entladesystem 2 zugeführt werden muss.

Um eine sichere Entladung der einzelnen Speicherzellen 5 zu gewährleisten bevor das Speichermodul 4 weiterverarbeitet, beispielsweise recycelt oder auch repariert werden kann, wird nun mittels einer Stromquelle 12, die gemäß Figur 2 Bestandteil eines Steuergerätes 6 ist, durch den Stromkreis 24, in dem sich die Speicherzellen 5 befinden, ein elektrischer Strom I geführt und somit die einzelnen Speicherzellen 5 entladen. Dabei wird während des Entladens mittels Spannungsmesseinheiten 10 über jede einzelne Speicherzelle 5 die Spannung V, insbesondere der Spannungsabfall gemessen. Wird die Speicherzelle 5 durch das Einbringen von elektrischem Strom I entladen, so sinkt auch die Zellspannung V, die zwischen Polen 28 der Speicherzelle 5 anliegt. Wenn die Spannung 0 ist, so ist auch die in der Speicherzelle 5 enthaltene elektrische Energie 0. Würde in diesem Fall eine weitere Beaufschlagung der Speicherzelle 5 mit elektrischem Strom erfolgen, würde es zu einer negativen Ladung also zu einer Polarisierungsänderung führen. Dies ist insofern gefährlich, da es die Speicherzelle 5 in der Art geschädigt werden kann, dass es zu einer thermischen Zersetzung kommt. Aus diesem Grund ist es zweckmäßig, wenn gemäß Figur 3 an der Speicherzelle 5, bei der die Spannungsmesseinheit 10 eine Spannung von 0 V oder nur geringfügig über 0 V, beispielsweise 0,1 V misst, ein Kurzschlussschalter umgelegt wird, sodass die Pole 28 der betroffenen Speicherzelle 5 überbrückt werden und ein Kurzschlussstromkreis oder Überbrückungsstromkreis 42 eingerichtet wird. Durch diesen Überbrückungsstromkreis 42 wird die betroffene Speicherzelle 5' aus dem Stromkreis 24 herausgenommen, sodass keine weitere Energie in diese Speicherzelle 5' einfließen kann und diese entleert bleibt. Der Stromkreis 24 bleibt so lange geschlossen und es wird so lange elektrischer Strom durch diesen Stromkreis 24 geleitet, bis alle weiteren Speicherzellen 5 entladen sind und die darüber gemessene Spannung V 0 V beträgt oder knapp über 0 V liegt. Ist dies der Fall, kann das gesamte Speichermodul 4 aus der Entladeeinheit 14 entnommen werden und einer weiteren Verwendung zugeführt werden. Diese weitere Verwendung kann beispielsweise eine Generalüberholung der einzelnen Speicherzellen 5 oder auch ein vollständiges Recyceln des Speichermoduls 4 sein.

Es kann vorteilhaft sein, dass nach dem Schließen des Kurzschlussschalters 30 eine erneute Spannungsmessung durchgeführt wird, da es möglich sein kann, dass durch Relaxationseffekte in der Speicherzelle 5 erneut eine Spannung an deren Pole 28 anliegt und eine weitere Entladung dieser Speicherzelle 5 nötig wird. Die Zeitdauer bis zur weiteren Messung kann je nach Art und Kapazität der Speicherzelle zwischen wenigen Minuten bis zu einigen Stunden, beispielsweise 3 h betragen. Sollte wieder eine Spannung anliegen, wird der Kurzschlussschalter 30 erneut geöffnet und dann wieder geschlossen, wenn der Schwellwert für die Zellspannung wieder unterschritten wird.

In den Figuren 2 und 3 ist gemäß des beschriebenen Ersatzschaltbildes das Steuergerät 6 in der Art ausgestaltet, dass es eine Steuereinheit 8 sowie eine Stromquelle 12 umfasst. Grundsätzlich können auch die einzelnen Strommesseinheiten 10 Bestandteil des Steuergerätes 6 sein. Hierzu wäre es jedoch nötig, dass eine entsprechende Verbindung zwischen der Spannungsmesseinheit und dem Steuergerät vorliegt (Messverbindung 32). Eine derartige Messverbindung 32 ist in der vereinfachten Form gemäß den Figuren 2 und 3 nicht eingezeichnet. Ebenso fehlt der Übersicht halber eine Steuerverbindung 34 (Figuren 4 und 5) zur Übertragung eines Steuersignals 36, was dazu führt, dass der Kurzschlussschalter 30 bei Erreichen entsprechenden Spannungsschwellwertes an der zugeordneten Speicherzelle 5 geschlossen wird.

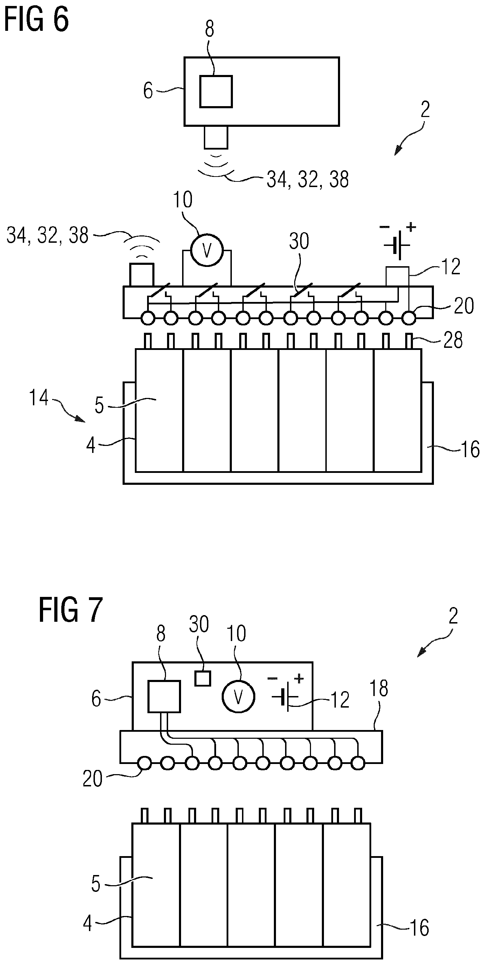

In den Figuren 4 bis 7 sind hierfür verschiedene Ausgestaltungsformen gegeben. In Figur 4, die wiederum eine Querschnittsdarstellung der Entladeeinheit 14 gemäß Figur 1 ist und in der zusätzlich noch das Steuergerät 6 dargestellt ist, ist die Kontaktierungsvorrichtung 18 über eine Steuerverbindung 34 in Form von elektrischen Leitungen 40 vorgesehen. Diese Steuerverbindung 34 führt dazu, dass ein Steuersignal 36 vom Steuergerät 6, errechnet durch die Steuereinheit 8, an die Kontaktierungsvorrichtung 18 und zu den darin integrierten, hier nicht dargestellten Kurzschlussschaltern 30 (vergleiche Figur 6) gesendet wird. Ferner ist in den Figuren 4 und 5 (Figur 5 zeigt die Vorrichtung 14 gemäß Figur 4 mit geschlossener Kontaktierungsvorrichtung 18) jeweils eine elektrische Leitung sowohl für die Übertragung der Spannungsmessung (Messverbindung 32) als auch zur Übertragung des Steuersignals 36 über die Steuerverbindung 34 vorgesehen. Diese festen elektrischen Leitungen 40 in Form von der Messverbindung 32 und der Steuerverbindung 34 ermöglichen es, sowohl die Kurzschlussschalter 30 beispielsweise als Halbleiterschalter, beispielsweise als MOSFET oder als MEMS in dem Steuergerät 6 auszugestalten. Hierzu bedarf es zwar mehr elektrischer Leitung zwischen dem Steuergerät 6 und der Kontaktierungsvorrichtung 18, dies hat jedoch den Vorteil, dass die Kontaktierungsvorrichtung 18 variabler ausgestaltet werden kann und für verschiedene mögliche Geometrien von Speichermodulen 4 genutzt werden kann. Dabei wäre es auch zweckmäßig, wenn das Steuergerät 6 mit der jeweils integrierten Steuereinheit 8, sowie den Spannungsmesseinheiten 10 und der Stromquelle 12 sowie dem Kurzschlussschalter 30 im Halbleiterformat sehr nahe oder direkt an der Kontaktierungsvorrichtung 18 angeordnet wäre. Eine derartige Alternative ist beispielsweise in Figur 7 veranschaulicht.

In einer alternativen Ausgestaltung ist gemäß Figur 6 das Steuergerät 6 über eine Steuerverbindung 4 in Form einer Funkverbindung 38 verbunden, was den Vorteil hat, dass das Steuergerät 6 mit seiner Recheneinheit 8 dezentral, gegebenenfalls auch in einer Cloud angeordnet sein kann. Das Steuergerät 6 muss in diesem Fall nicht in möglicherweise verschmutzter Umgebung angeordnet sein, sondern kann an einem sauberen Ort untergebracht sein und kann dabei auch gleichzeitig mehrere verschiedene Entladeeinheiten 14 gleichzeitig steuern. Dies bedeutet jedoch, dass sowohl die jeweiligen Spannungsmesseinheiten 10 für jede Speicherzelle 5 sowie die Kurzschlussschalter 30 an der Kontaktierungsvorrichtung 18 angeordnet sein sollten. Auch die Stromquelle 12 kann in einiger Entfernung von der Entladeeinheit 14 angeordnet sein. Hierzu müsste jedoch ein hier nicht dargestelltes Stromkabel zur Erzeugung des Stromkreises 24 an die Entladeeinheit 14 geführt sein. In diesem Fall wäre es zweckmäßig, mechanische Schalter, beispielsweise die Relayschalter, als Kurzschlussschalter 30 zu verwenden, die auch in verschmutzter Umgebung zuverlässig einsetzbar sind.

### Bezugszeichenliste

- 2: Entladesystem
- 4: Speichermodul
- 5: Speicherzelle
- 6: Steuergerät
- 8: Steuereinheit
- 10: Spannungsmesseinheit
- 12: Stromquelle
- 14: Entladeeinheit
- 16: Aufnahmeeinheit
- 18: Kontaktierungsvorrichtung
- 20: elektrische Kontaktierung
- 22: Reihenschaltung Speicherzelle
- 24: Stromkreis
- 28: Pole
- 30: Kurzschlussschalter
- 32: Messverbindung
- 34: Steuerverbindung
- 36: Steuersignal
- 38: Funkverbindung
- 40: elektrische Verbindung
- 42: Überbrückungsstromkreis

- V: Zellspannung

## Patentansprüche

1. Entladesystem (2) für Speicherzellen (5) umfassend
- ein Steuergerät (6) mit einer Steuereinheit (8)
eine Spannungsmesseinheit (10),
- eine Stromquelle (12)
- eine Entlade-Einheit (14) umfassend wenigstens eine Aufnahme-Einheit (16) für ein Speichermodul (4), und
- eine an die Geometrie des Speichermoduls (4) angepasste Kontaktierungsvorrichtung (18),
**dadurch gekennzeichnet, dass**
eine Mehrzahl von mechanisch fest miteinander verbundener Speicherzellen das Speichermodul (4) bilden
die Kontaktierungsvorrichtung in derart mit dem Speichermodul (4) in Verbindung steht, dass eine elektrische Kontaktierung (20) der Speicherzellen (5) erfolgt, so dass die Speicherzellen (2) in Reihe (22) geschaltet sind und mit der Stromquelle (12) in einem schließbaren Stromkreis (24) angeordnet sind und,
die in Reihe (22) geschalteten Speicherzellen (5) jeweils zur Auswertung von Spannungsmessungen in Verbindung (32) zur Spannungsmesseinheit (10) steht
- wobei zu den Polen (28) der in der Reihenschaltung (22) befindlichen Speicherzelle (5) jeweils ein Kurzschlussschalter (30) parallel geschaltet ist, der in Steuerverbindung (34) mit dem Steuergerät (6) steht und
- der durch ein durch die Steuereinheit (8) des Steuergeräts (6) erzeugtes Steuersignal (36) schaltbar ausgestaltet ist.

2. Entladesystem nach Anspruch 1, **dadurch gekennzeichnet, dass** bei einer von der Spannungsmesseinheit (10) gemessenen Zellspannung (V) zwischen zwei Polen (28) einer in der Reihenschaltung (22) befindlichen Speicherzelle (5), die unterhalb einer Schwellspannung liegt, der parallelgeschaltete Kurzschlussschalter (30) in geschlossenem Zustand vorliegt.

3. Entladesystem nach Anspruch 1 oder 2, **dadurch gekennzeichnet, dass** die Kurzschlussschalter (30) in die Kontaktierungsvorrichtung (18) integriert sind.

4. Entladesystem nach einem der Ansprüche 1 bis 3, **dadurch gekennzeichnet, dass** die Steuerverbindung (34) in Form einer Funkverbindung (38) oder in Form einer elektrischen Verbindung (40) ausgestaltet ist.

5. Entladesystem nach Anspruch 1 oder 2, **dadurch gekennzeichnet, dass** der Kurzschlussschalter (30) im Steuergerät (6) integriert ist.

6. Entladungssystem nach einem der vorhergehenden Ansprüchen, **dadurch gekennzeichnet, dass** Kurzschlussschalter (18) in Form von Relais, Schützen oder Halbleiterschalter ausgestaltet sind.

7. Entladesystem nach einem der vorhergehenden Ansprüche, **dadurch gekennzeichnet, dass** die Kontaktierungsvorrichtung (18) die Spannungsmesseinheit (10) umfasst.

8. Entladesystem nach einem der vorhergehenden Ansprüche, **dadurch gekennzeichnet, dass** das Steuergerät (6) an der Kontaktierungsvorrichtung (18) angeordnet ist.

9. Verfahren zum Betreiben eines Entladesystems für Speicherzellen (5) umfassend folgende Schritte:
- Einbringen eines Speichermoduls (4) das eine Mehrzahl miteinander mechanisch verbundener Speicherzellen (5) umfasst in eine Aufnahme-Einheit (16),
- Inverbindungbringen des Speichermoduls (4) mit einer an dieses geometrisch angepassten Kontaktierungsvorrichtung (18), wobei
- Pole (28) der Speicherzellen (5) in der Art kontaktiert werden, dass die Speicherzellen (5) in Reihe (22) geschaltet werden und mit einer Stromquelle (12) in einem Stromkreis (24) angeordnet werden,
- die Pole mit einem Überbrückungsstromkreis (42) verbunden werden, in dem ein durch ein Steuersignal (36) schaltbarer Kurzschlussschalter (30) eingebracht ist
- Messen einer Zellspannung (V) der Speicherzellen (5) über deren Polen (28) und
- Schließen des zu dieser Speicherzelle (5) korrespondierenden Kurzschlussschalters (30) wenn die Zellspannung (V) der Speicherzelle (5) einen vorgegebenen Schwellwert unterschreitet.

10. Verfahren nach Anspruch 7, **dadurch gekennzeichnet, dass** nach dem Schließen des Kurzschlussschalters (30) eine weitere Messung der Zellspannung (V) erfolgt.

11. Verfahren nach Anspruch 8, **dadurch gekennzeichnet, dass** die weitere Messung der Zellspannung (V) nach einem definierten Zeitraum nach Schließen des korrespondierenden Kurzschlussschalters (30) erfolgt.
